(19) Europäisches Patentamt
European Patent Office
Office européen des brevets

(11) **EP 0 986 027 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.$^7$: **G06T 17/20**, G06T 17/00

(21) Anmeldenummer: **99810771.8**

(22) Anmeldetag: **26.08.1999**

(54) **Verfahren zur Generierung eines Finite-Elemente-Modells einer Formschale für ein Gussteil**

Method of generating a finite element model of a shell mold for a casting

Procédé pour générer un modèle d'éléments finis pour un moule pour une pièce coulée

(84) Benannte Vertragsstaaten:
**CH DE FR GB LI**

(30) Priorität: **10.09.1998 DE 19841389**

(43) Veröffentlichungstag der Anmeldung:
**15.03.2000 Patentblatt 2000/11**

(73) Patentinhaber: **ALSTOM Technology Ltd**
**5400 Baden (CH)**

(72) Erfinder:
• **Busse, Frank**
**52072 Aachen (DE)**

• **Hofmann, Norbert, Dr.**
**5234 Villigen (CH)**

(56) Entgegenhaltungen:
**US-A- 4 641 270**

• **BLACKER T D ET AL: "PAVING: A NEW APPROACH TO AUTOMATED QUADRILATERAL MESH GENERATION" INTERNATIONAL JOURNAL OF NUMERICAL METHODS IN ENGINEERING, CHICHESTER, GB, Nr. 32, 1991, Seiten 811-847, XP001080794 ISSN: 0029-5981**

**Beschreibung**

**Technisches Gebiet**

Die Erfindung bezieht sich auf ein Verfahren zur Generierung eines FE-Modells (FEs Finite Element); eine Formschale für ein Gußteil, bei dem die Formschale aus einer Vielzahl miteinander über Knotenpunkte verbundene finite Volumen- oder Oberflächenelemente beschrieben wird, deren Gesamtheit ein Netz, das sogenannte FE-Netz zur Beschreibung der Oberfläche der Formschale darstellt.

**Stand der Technik**

Gattungsgemäße Verfahren sind die Grundlage für die industrielle Herstellung komplizierter Gußteile von komplexer Geometrie, die aufgrund ihres oftmals das Gußmaterial sehr beanspruchenden Einsatzes höchsten Anforderungen an Gußqualität entsprechen müssen. Von besonderem Interesse ist hierbei die Herstellung von Turbinenschaufeln, die im Bereich der Gasturbinentechnik bei hohen Druck- und Temperaturbedingungen höchsten Materialbelastungen ausgesetzt sind. Es steht außer Frage, daß die Lebensdauer derartiger Gußteile in besonderem Maße von der Qualität abhängt, mit der sie hergestellt werden, da bei Gußverfahren neben der Verwendung präzise gearbeiteter Gußformen auch die sich nach dem Gießvorgang anschließende Abkühlphase großen Einfluß auf die Ausbildung mechanischer Spannungen im Inneren des Gußteils hat. Sowohl die Geometrie des Gußteils, als auch der Abkühlvorgang werden entscheidend durch die Ausgestaltung der Formschale bestimmt, in der das Gußteil selbst entsteht.

So hat sich bei der aufwendigen Herstellung von Turbinenschaufeln die Her stellung von keramischen Formschalen nach dem sogenannten Wachsausschmelzverfahren in den letzten 25 Jahren etabliert. Mit diesem Herstellungsverfahren, das einem Tauchverfahren entspricht, können Formschalen mit variabler Wanddicke hergestellt werden, wobei die Wanddicke eine Funktion der Oberflächenkrümmung des Gußstückes ist. Ausgehend von einem, aus schmelzbaren Material (z.B. Wachs) gefertigten Prototyp einer Turbinenschaufel wird diese in ein flüssiges Bad, bestehend aus temperaturbeständiger, verfestigungsfähiger Masse eingetaucht, wobei sich eine Art Überzug auf der Oberfläche der Turbinenschaufel absetzt. Nach Entnahme der Turbinenschaufel aus dem Bad verhärtet sich der auf der Oberfläche der Turbinenschaufel abgesetzte Überzug, so daß der Tauchvorgang so oft wiederholt werden kann, bis eine gewünschte Formschalendicke erreicht wird. Abschließend wird die auf die vorstehend beschriebene Weise gewonnene Formschale erhitzt, bis sich das Prototypen-Turbinenschaufelmaterial (Wachs) verflüssigt und aus der Formschale ablaufen kann.

Bei der Herstellung derartiger Formschalen ist besondere Sorgfalt anzuwenden, da beim Erstarren der Schmelze in der Formschale die Schalendicke der Formschale entscheidend den Wärmefluß durch die Turbinenschaufel und somit die Gußqualität bestimmt.

Ferner ist es möglich, die Formschalen unter Verwendung von Finiten Elementen (FE) theoretisch numerisch zu generieren, die zur Simulation von Oberflächengeometrien geeignet sind.

Um eine FE-Simulation durchzuführen, wird das Gußstück auf Grundlage von technischen Zeichnungen oder CAD-Daten vernetzt. So liegen für die Formschale nur im Blattbereich der Turbinenschaufel detaillierte geometrische Daten vor, weshalb die Generierung der Formschale in zwei getrennten Arbeitsschritten möglich ist:

Im ersten Schritt wird auf dem Blattbereich der vernetzten Schaufel manuell eine Formschale generiert. Es gibt zwei Möglichkeiten dies zu tun:

1. Es werden manuell Oberflächenelemente generiert, die der Oberfläche der Formschale entspricht. Anschließend wird automatisch das Volumennetz zwischen den Oberflächenelementen der Prototypen-Gussform und dem manuell generierten Oberflächennetz der Formschale generiert.

2. Es werden manuell Volumenelemente auf die Oberflächenelemente der Prototypen-Gussform aufgesetzt, die das Volumennetz der Formschale beschreiben.

Diese beiden Schritte werden typischerweise mit kommerziellen Vernetzungsprogrammen (z.B. IDEAS SUPERTAB, CATIA, ...) durchgeführt.

Die exakte Einhaltung der Formschalendicke im Blattbereich erfordert eine zeitintensive Definition der Formschalenoberfläche. Im Fuß- und Kopfbereich der Turbinenschaufel hingegen ergeben sich durch den Herstellungsprozeß große Formschalendicken, die durch die komplexe Oberfläche in diesem Bereich bestimmt werden. Durch die große Formschalendicke im Fuß- und Kopfbereich der Schaufel ergeben sich häufig komplex strukturierte Oberflächen. Diese vielen komplexen Flächen sind manuell aus der Oberflächengeometrie des Prototypen nicht bearbeitbar. Daher werden komplexe Geometrien vereinfacht zu Lasten der Genauigkeit der geometrischen Beschreibung der Formschale. Mittels kommerzieller Software wird hier die Position und Form der Oberfläche der Formschale abgeschätzt und entsprechend ungenau beschrieben. Mittels der kommerziellen Software wird aus der geschätzten und somit ungenauen Oberflächenbeschreibung der Formschale zuerst ein Oberflächenelementnetz der Formschale generiert. Anschließend wird aus dem Oberflächenelementnetz des Prototypen und der Formschale ein Volumenelementnetz automatisch geniert.

Durch den Einsatz von automatischen Formschalengeneratoren, auf der Basis von Verfahren zur Erzeugung räumlicher Objekte unter Verwendung finiter Elemente, wie dies beispielsweise aus der amerikanischen Druckschrift US 5,581,489 hervorgeht, läßt sich der Vernetzungsaufwand bei der Generierung von Formschalen zur Herstellung einer Gasturbinenschaufel stark reduzieren. So ist es möglich bei der Vernetzung einer Gastrubinenschaufel überschlagsmäßig bis zu zwei MannWochen gegenüber der traditionellen manuellen Vernetzung einzusparen. Gleichzeitig steigt die Detailtreue der Geometriebeschreibung der Formschale und folglich die Rechengenauigkeit der Finiten Elemente Simulation.

Durch das große Zeiteinsparpotential bei der Vernetzung von Formschalen sind einige wenige Ansätze gemacht worden, automatische Formschalengeneratoren unter Verwendung Finiter Elemente oder Control-Volumen-Netze zu entwickeln. Jedoch haften den bekannten Schalengeneratoren der Nachteil an, daß die Schalengeneratoren nicht alle Aspekte des Herstellungsprozesses, insbesondere die Krümmungsabhängigkeit der Formschalendicke, berücksichtigen. Damit ist jedoch keine exakte Simulation des Feingußprozesses möglich, da die kommerziellen Netzgeneratoren weder der Krümmung noch der Orientierung der Volumenelemente der Formschale Rechnung tragen. Folglicherweise nimmt die Genauigkeit der Temperatur, Spannungs- und Verformungssimulation sowie der Strömungssimulation der Guß- und Formschalengeometrie deutlich ab.

Ein Schlüsselfaktor für die Weiterentwicklung von Gasturbinenschaufeln liegt in der Gießbarkeit der Schaufel selbst, ein Problem, das aufgrund der immer komplizierter werdenden Schaufelformen, mehr und mehr in den Mittelpunkt der Gastubinenentwicklung gerät. Mit konventioneller Gießtechnologie ist man heute z.T. nicht mehr in der Lage, größere Schaufeln fehlerfrei zu gießen.

Erst durch den Einsatz numerischer Simulation des Gießprozesses läßt sich der Gießvorgang evaluieren und optimieren. Um einen Feingußprozeß zu optimieren bedarf es jedoch zwei bis zwanzig Variationen bzw. Optimierungsschritte, um eine geeignete Geometrie des Gußbauteils und somit das ideale Formschafennetz zu erhalten. Eine schnelle und präzise Vernetzung der Formschale trägt somit zu einer verkürzten Entwicklungszeit des Gießprozesses um typischerweise 4 - 10 MannWochen bei.

Zwar ist der US 4,641,270 ein Verfahren zur Herstellung einer Gussform unter Verwendung eines 3D-Computerprogramms zu entnehmen, doch sieht das bekannte Verfahren die Berechnung von Trennebenen vor, durch die einerseits das zu gießende Modell von der Gussform und andererseits durch die die Gussform selbst zur Entnahme des Modells aus der Gussform trennbar sind. Dieses Verfahren ist jedoch vollkommen ungeeignet Turbinenschaufeln mit den vorstehend erläuterten Qualitätsansprüchen herzustellen.

Schließlich sind aus dem Artikel von Ted D. Blacker et al., " Paving: A New Approach to Automated Quadrilateral Mesh Generation", Int. Joumal of Numerical Methods in Engineering, Chichester, Gb (1991), (32), 811-847, Grundlagen zur numerischen Erzeugung von 2D-FE-Gitterstrukturen zu entnehmen. Nur beispielhaft sei auf die Seiten 820 ff verwiesen, in denen die Generation eines 2D-Gitterzuges hervorgeht, die unter Zugrundelegung einer glatten Gitterlinienbildung auf der Basis von Vektoraddition beruht.

## Darstellung der Erfindung

Der Erfindung liegt die Aufgabe zugrunde ein Verfahren zur Generierung eines FE-Modells für eine Formschale für ein Gußteil, bei dem die Formschale aus einer Vielzahl miteinander über Knotenpunkte verbundene finite Volumenelemente oder Ober flächenelemente beschrieben wird, deren Gesamtheit ein Netz, das sogenannte FE-Netz zur Beschreibung der Oberfläche der Formschale darstellt, derart weiterzubilden, daß bei der Ermittlung der Formschale das Krümmungsverhalten des Gußteils mitberücksichtigt wird, indem die Dicke der Formschale in Abhängigkeit des Krümmungsverhalten des Gußteils und somit der Formschale ausgebildet werden soll. Hierbei giltes zudem das Verfahren moglichst flexibel auf beliebige Gußteilformen, insbesondere Turbinenschaufeln , anwenden zu können. Um den Grad der Genauigkeit, mit der die Formschale an die Oberfläche des Gußteils angepaßt wird, individuell verändern zu können, soll das dem Verfahren zugrundeliegende Formschalennetz vergröbert bzw. verfeinert werden. Fer ner sollen Korrekturmöglichkeiten bei der Generierung des Formschalennetzes vorhanden sein, durch die Löcher oder Vertiefungen auf der Gußteiloberfläche besser berücksichtigt werden können, z.B. indem Löcher verschlossen werden, sowie soll es möglich sein unzulässige Volumen-Elemente, die sich bspw. gegenseitig überlappen zu erkennen und zu eliminieren. Schließlich soll die Möglichkeit bestehen, daß der Formschalengenerator auch für andere Verfahren, die krümmungsabhängige Schichten benötigen, benutzt werden kann.

Die Lösung der der Erfindung zugrundeliegenden Aufgabe wird gemäß Anspruch 1 gelöst. Den Erfindungsgedanken weiterbildende Merkmale sind Gegenstand der Unteransprüche.

Erfindungsgemäß ist ein Verfahren nach dem Oberbegriff des Anspruchs 1 durch die Kombination folgender Verfahrensschritte ausgebildet:

Zu allererst wird die reale Oberflächengeometrie des Gußteils, in Form eines zusammenhängenden Basisnetzes, das aus Flächenelementen zusammengesetzt wird, die durch Knotenpunkte definiert und verbunden sind, erfaßt und generiert. Hierzu eignen sich an sich bekannte Hilfsprogramme, die ein Einlesen der FE-Geometrie des zu gießenden Gußteils ermöglichen. Diese Daten können auch aus CAD-Systemen importiert werden, sofern die Konstruktion des Gußteils auf Basis eines CAD-Systems erfolgte.

Nachfolgend wird eine genäherte Nachbildung der realen Oberflächengeometrie der Gußgeometrie mittels finiter Volumenelemente oder Oberflächen-elementen erzeugt, die das FE-Netz bilden. Die im Basisnetz enthaltenen Basis-knoten, die ein oder mehreren Oberflächenelementen zugeordnet sind, definieren in ihrer Gesamtheit, verknüpft mit den zugehörigen Oberflächenelementen, die Oberfläche der Gußform.

Ferner werden zu allen Basisknoten sogenannte Schalenvektoren generiert, die senkrecht zu den jeweiligen Basisknoten enthältenden Pseudo-Tangentialebene orientiert sind, deren Länge jeweils in Abhängigkeit vom Krümmungsverhalten der Flächenelemente an den Basisknotenpunkten generiert wird und dem Abstand zu einem neuen Flächenelement entspricht, das über jedem Basis-knoten positioniert wird und jeweils ein Volumenelement und/oder neue Oberfläche definiert, das zusammen mit allen anderen neu gebildeten Volumenelementen und/oder Oberflächenelementen zu einer ersten Lage der Formschale führt. Hierbei wird zur Generierung jeweils eines Schalenvektors eine genichtete Summation über Flächennormalenvektoren der an den Basisknoten oder Schalen knoten anliegendden Flächenelemente durch geführt.

Der Endpunkt des auf den Basisknotenpunkt aufgesetzten Schalenvektors definiert den neuen Schalenknotenpunkt.

Durch iterative Wiederholung der Generierung von Schalenvektoren auf Basisknotenpunkten unter Berücksichtigung der Topologie der Basisknotenpunkte, wobei die neu generierten Schalenknotenpunkte aus dem vorherigen Generierungsschritt wieder ein Basisnetz definieren, deren zugeordnete Volumenelemente und/oder Oberflächenelemente eine weitere Lage der Formschale definieren, wird nach und nach in Art eines Zwiebelschalenaufbaus die vollständige Formschale erzeugt, die in Abhängigkeit ihrer lokalen Krümmung eine gewünschte vorgegebene Enddicke erreicht.

Zur Bildung jeweils einer Lage der Formschale auf Basis der Schalenknoten und der in Abhängigkeit des Krümmungsverhalten auszubildenden Schalenvektoren finden zwei unterschiedlich arbeitende Module Anwendung:

- Modell I : Mapped Mesher (Volumenelement-Vernetzung)

- Modell II: Free Surface Mesher (Oberflächen-Vernetzung)

Während im Mapped Mesher zur Bildung einer Formschalen-Lage direkt neue Volumen-Elemente generiert werden, werden im Free Surface Mesher nur die neuen Oberflächenelemente generiert. Die Generation von neuen Elementen im

Mapped Mesher läßt sich jedoch nur realisieren, sofern die Oberfläche konvex gekrümmt (Krümmung nach außen) ist. Eine leicht konkave Krümmung ist nur zulässig, sofern der Krümmungsradius größer als die lokale Formschalendicke ist. Entstehen während der Elementgeneration deformierte Elemente, so wird im Mapped Mesher die Formschalengeneration abgebrochen.

Im Falle des Free Surface Mesher-Moduls wird das Volumen zwischen der Gußoberfläche und der berechneten Formschalenoberfläche durch Tetraeder mittels kommerzieller Software vernetzt. Dieser Schritt entfällt für das Mapped Mesher Verfahren, da bei jedem Extrusionsschritt, d.h. bei jeder Bildung einer neuen Lage, direkt neue Volumen-Elemente generiert werden.

Im weiteren wird exemplarisch der Verfahrensablauf für die Formschalengeneration unter Verwendung des Mapped Mesher Verfahrens beschrieben

Das mittels CAD-Daten gewonnene oder mittels geeigneter Hilfsprogramme synthetisierte FE-Modell stellt eine genäherte Darstellung der realen Geometrie des Gußteils, bspw. die Geometrie einer Turbinenschaufel, dar. So soll durch die Kombination vieler einzelner Volumenelemente, bspw. in Form von Hexaedern, Pentaedern, und/oder Tetraedern das Gußvolumen möglichst genau diskretisiert sein. Die Eckpunkte dieser Elemente, die sogenannten Knoten, bestimmen die Lage der einzelnen Elemente und ihre räumliche Verknüpfung untereinander. Die Gesamtheit dieser Elemente und der ihnen zugeordneten Knoten bilden das sogenannte FE-Netz (Finite-Elemente-Netz).

Da eine Formschale um einen Körper nicht durch sein Volumen, sondern durch seine Oberfläche bestimmt wird, wird seine Oberfläche im FE-Modell durch Flächenelemente dargestellt.

Die kleinste Einheit des FE-Netzes ist der Knoten. Das erfindungsgemäße Verfahren ermittelt zu jedem Basisknoten des Basisnetzes, das der Gußteiloberfläche oder einer schon in einem vorherigen Schritt generierten Formschalenoberfläche (Iterative Generierung der Formschale) entspricht, mit Hilfe der direkt benachbarten Knoten einen Schalenknoten. Der Schalenknoten definiert zu jedem Element des Basisnetzes ein Oberflächenelement der Formschale. Überdies definiert jedes Element des Basisnetzes mit dem zugehörigen Oberflächenelement ein Volumenelement der Formschale. Die Gesamtheit dieser ermittelten Volumenelemente bildet das primäre Volumennetz oder die erste Lage der Formschale.

So kann das primäre Volumennetz auf einer konkaven Oberfläche unbrauchbare Elemente enthalten. Das sind Volumenelemente, die sich gegenseitig überschneiden. Hierfür ist das Verfahren in der Lage ungültige Elemente und Überschneidungen von erlaubten Elementen zu erkennen und die Ungültigen zu beseitigen. Die korrigierte Schale sollte außerdem eine vorgegebene Spannweite von Krümmungen einhalten.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

| | |
|---|---|
| Fig. 1 | Konstruktionsdarstellung zur Definition eines Normalenvektors auf einem Punkt $P_1$, |
| Fig. 2 a, b | Darstellung einer Normalen auf einer Kegelspitze, |
| Fig. 3 a, b, c | Darstellungen zur Ermittlung der Knotennormalen unter Berücksichtigung der Flächenwichtung, |
| Fig. 4 | Darstellung zur Krümmungsberechnung an einem Punkt, |
| Fig. 5 | Darstellung zur Generation einer 4 lagigen Formschale, |
| Fig. 6 | Darstellungen zum Wachstum einer Formschale für eine Turbinenschaufel, |
| Fig. 7 a, b | Defekte Volumenelemente bei der Generierung von Volumenelementen in konkaven Vertiefungen einer Formschale nach dem Mapped Mesher Verfahren, |
| Fig. 8 a, b, c, d | Darstellungen zu einem Korrektur- und Erkennungsverfahren von defekten Formschalenelemente, die für Finite Element Analyse unbrauchbar sind. |

## Wege zur Ausführung der Erfindung, gewerbliche Verwendbarkeit

Ausgehend vom Basisnetz, das sich aus einer Vielzahl von Basisknotenpunkten zusammensetzt, werden die Schalenknoten unter Zugrundelegung sowohl der gewünschten Dicke der Formschale bzw. der zu erzeugenden Lage, gemessen normal zur Oberfläche der ursprünglichen Geometrie des Gußteils, die im Basisnetz als ebenes Oberflächenelement beschrieben ist, als auch der relativen Abweichung von dieser Dicke als Funktion der Krümmung der ursprünglichen Geometrie des Gußteils, gewonnen.

Ein Schalenknotenpunkt $\vec{P}_{S_i}$ am Basisknotenpunkt $\vec{P}_i$ des Basisnetzes ergibt sich aus dem Basisknotenpunkt $\vec{P}_i$ der ursprünglichen Geometrie des Gußteils und seinem Schalenvektor $\vec{S}_i$.

$$\vec{P}_{S_i} = \vec{P}_i + \vec{S}_i \qquad \text{(Gl. 1)}$$

Der Schalenvektor $\vec{S}_i$ hat die Richtung der Normalen $\vec{N}_i$ auf dem Basisknotenpunkt $\vec{P}_i$ des Oberflächennetzes, das dem Basisnetz entspricht. Seine Länge ergibt sich aus der vorgegebenen mittleren Dicke D, die entsprechend der Formschalendicke eines realen Bauteils gewählt wird und einer Krümmungformulierung $K_i$ im Basisknotenpunkt $\vec{P}_i$. Die Dicke und somit die Länge des Schalenvektor $\vec{S}_i$ am Basisknotenpunkt $\vec{P}_i$ wird mittels des Krümmungsfaktors $K_i$ (im folgenden Krümmung genannt) am Basisknotenpunkt $\vec{P}_i$ bestimmt. Auf die Ermittlung der Krümmung $K_i$ am Basisknotenpunkt $\vec{P}_i$ wird im weiteren im einzelnen noch eingegangen.

Es gilt für den Schalenvektor $\vec{S}_i$:

$$\vec{S}_i = D(K_i)\vec{N}_i \qquad \text{(Gl.2)}$$

Mittels experimenteller Untersuchungen der Formschalendicke in Abhängigkeit des Krümmungsfaktor $K_i$ wird ein eindeutiger Zusammenhang zwischen Dicke und Krümmung hergestellt, der die physikalischen Eigenschaften des Herstellungsprozesses und des Formschalenmaterials Rechnung trägt. Es wird eine Tabelle und/oder Graph aufgestellt, die die Formschalendicke D eines Formschalenmaterials als Funktion der noch zu beschreibenden Krümmung darstellt.

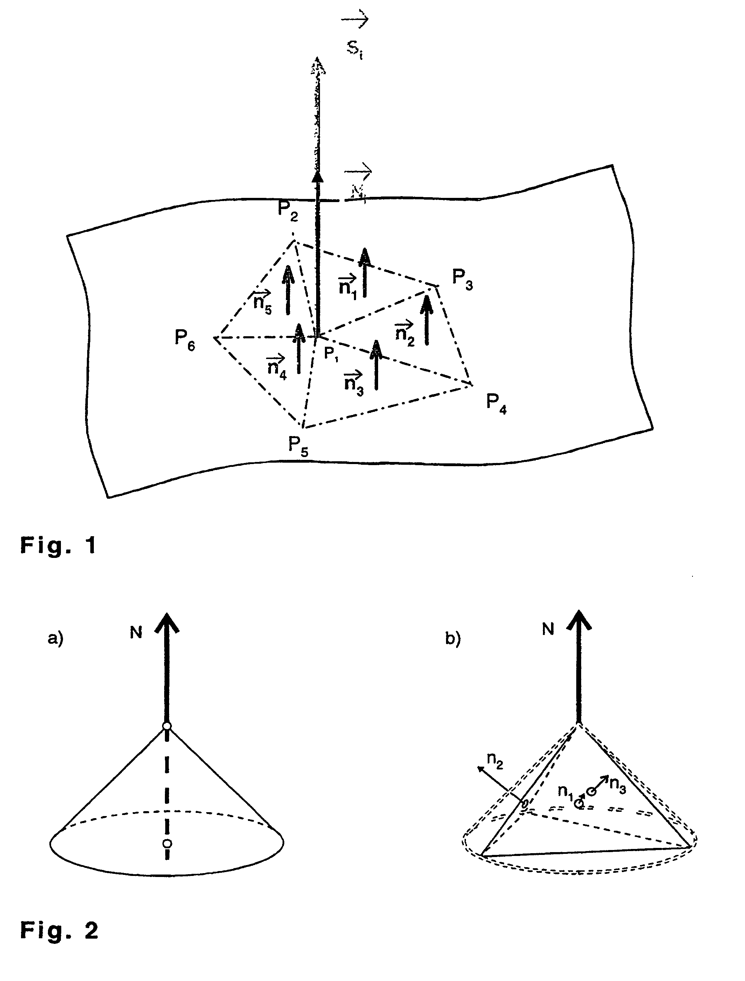

Als weitere Größe in Gleichung 2 wird der Normalenvektor $\vec{N}_i$ auf einem Basisknotenpunkt berechnet. Zwar ist die Normalenrichtung $\vec{N}_i$ auf einem Basisknotenpunkt einer FE-vernetzten Oberfläche nicht definiert, da der Punkt nicht mathematisch differenzierbar ist. Der Normalenvektor $\vec{N}_i$ läßt sich jedoch durch eine gewichtete Summation über

die Normalenvektoren $\vec{n}_j$ der anliegenden Flächen genähert berechnen (siehe die Figuren 1 und 2). Dieser gewichtete akkumulierte Mittelwert der Flächennormalen definiert den Normalenvektor auf einem Basisknotenpunkt $\vec{P}_i$, wie es aus den Figuren 2 a und b zu entnehmen ist. In Figur 2 a ist die Bildung eines Normalenvektors auf einer Kegelspitze und in Figur 2 b die Bildung eines Normalenvektors auf einer gleichseitigen Pyramide angegeben.

Der so ermittelte Normalenvektor $\vec{N}_i$ steht senkrecht auf der Pseudo-Tangentialebene an dem Basisknotenpunkt $\vec{P}_i$ der Fläche. Es gilt für die Berechnung des Normalenvektors $\vec{N}_i$ am Basisknotenpunkt $\vec{P}_i$ folgende Berechnungsgrundlage, wobei der Index i die Punktnummer des Basisknotenpunkts $\vec{P}_i$ definiert.

$$\vec{N}_i = \frac{\sum_j \alpha_j \vec{n}_j}{\left| \sum_j \alpha_j \vec{n}_j \right|},$$ 

(Gl. 3)

Die Summation wird über alle anliegenden Flächen j am Basisknotenpunkt $\vec{P}_i$ ausgeführt.

Mit dem Normalenvektor $\vec{n}_j$ des anliegenden Oberflächenelementes j

$$\vec{n}_j = \frac{(\vec{k}_{j+1} \times \vec{k}_j)}{|\vec{k}_{j+1} \times \vec{k}_j|}$$

und den Tangentialvektoren $\vec{k}_j$, $\vec{k}_{j+1}$ des Oberflächenelementes j

$$\vec{k}_j = \vec{P}_j - \vec{P}_i$$

und der Gewichtung $\alpha_j$

$$\alpha_j = \arccos\left( \frac{\vec{k}_{j+1} \cdot \vec{k}_j}{|\vec{k}_{j+1} \cdot \vec{k}_j|} \right).$$

ergibt sich der Normalenvektor $\vec{N}_i$ am Basisknotenpunkt $\vec{P}_i$.

Die Summation des Produkts aus Gewichtsfaktor $\alpha_j$ mit dem Normalenvektors $\vec{n}_j$ des am Basisknotenpunkt $\vec{P}_i$ anliegenden Oberflächenelements j über alle anliegenden Flächen, wobei $\vec{k}_j$, $\vec{k}_{j+1}$ die Tangentialvektoren der anliegenden Oberflächen j beschreibt, ergibt den Normalenvektor $\vec{N}_i$.

Als Gewichtung der einzelnen Normalenvektoren $\vec{n}_j$ wählt man den Öffnungswinkel $\alpha_j$ der anliegenden Flächen j. Der Öffnungswinkel wird durch die beiden Seitenkanten $\vec{k}_j$ und $\vec{k}_{j+1}$ der anliegenden Fläche bestimmt, die an dem Knotenpunkt $\vec{P}_i$ zusammenlaufen. Im Beispiel der Figur 2 b ist lediglich aus Gründen der Übersichtlichkeit der Öffnungswinkel $\alpha_3$ für den Flächenanteil $A_3$ eingetragen.

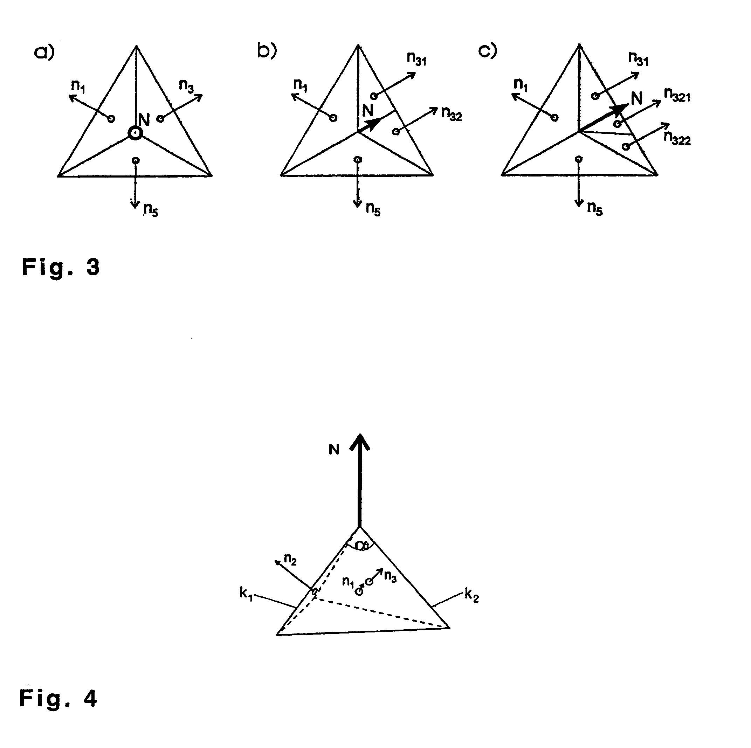

Der Öffnungswinkel $\alpha_j$ stellt ein geeignetes Maß für den Anteil der an dem Punkt anliegenden Fläche $A_j$ dar. Gewichtet man den Normalenvektor $\vec{n}_j$ mit dem Flächenmaß $A_j$, würden hingegen langgestreckte Flächen zu stark gewichtet, wie dies aus den Figuren 3 a bis c hervorgeht. In den Figuren 3 a bis c sind verschiedene Fallkonstruktionen für mögliche Flächenkombinationen dargestellt, die zu jeweils unterschiedlichen Ausbildungen von Normalenvektoren $\vec{N}_i$ führen. Figur 3 stellt den Fall einer gleichseitigen Pyramide dar. Der Normalenvektor $\vec{N}_i$ ist in diesem Fall senkrecht nach oben gerichtet. In Figur 3 b ist die ursprüngliche Fläche $A_3$ in zwei getrennte Flächen $A_{31}$ und $A_{32}$ unterteilt. Deutlich zu erkennen ist, daß der Normalenvektor durch die nun geänderte Flächenwichtung, die leicht in Richtung der Flächen $A_{31}$ und $A_{32}$ geneigt ist. Entsprechendes gilt für den Fall gemäß Figur 3 c. Das Ergebnis dieser Flächenwichtung ergibt unbrauchbare Ergebnisse.

Das folgende Beispiel soll die Berechnungsmethode für Normalenvektoren $\vec{n}_1$ der Fläche, die durch die drei Punkte $\vec{P}_1$, $\vec{P}_2$ und $\vec{P}_3$ definiert ist, darstellen:

$$\vec{n}_1 = \frac{\vec{k}_1 \times \vec{k}_2}{|\vec{k}_1 \times \vec{k}_2|} \tag{Gl.3b}$$

mit $\vec{k}_1 = \vec{P}_1 - \vec{P}_2$ und $\vec{k}_2 = \vec{P}_1 - \vec{P}_3$

Als letzte fehlende Größe zur Berechnung der Formschalendicke muß die Krümmung $K_i$ am Knotenpunkt $\vec{P}_i$ die in Gleichung 2 zur Ermittlung des Schalenvektors $\vec{S}_i$ vorkommt, berechnet werden. Die lokale Dicke $D_i$ am Knotenpunkt $\vec{P}_i$ ist durch experimentelle Untersuchung der Dicke als Funktion der Krümmung festgelegt. $K_i$ beschreibt die mittleren Krümmung am Knotenpunkt $\vec{P}_i$, die im folgenden Abschnitt behandelt wird.

Für die weiteren Betrachtungen sind folgende Konventionen zu treffen:

- Die Dicke der Formschalendicke darf nicht kleiner als Null sein $(D(K_i) \geq 0)$
- Ist die Fläche um $\vec{P}_i$ eben, dann muß die Dicke der Formschale einer mittleren Formschalendicke entsprechen. Das gilt auch für Flächen, auf denen sich die Krümmungen in verschiedene Richtungen ausgleichen sind, wie dies beispielsweise bei Sattelpunkten auftreten kann.
- Die Dicke der Formschalendicke darf einem maximalen Wert nicht überschreiten.

Im folgenden Abschnitt wird die Berechnung der Krümmung erläutert. Eine einfache Form der Darstellung der Krümmung stellt die Berechnung des mittleren Winkels zwischen der Flächennormale $\vec{N}_i$ im Punkt $\vec{P}_i$ und den anliegenden Kanten $\vec{k}_j$ dar. Dazu summiert man den Öffnungswinkel $\beta_i$ zwischen Flächennormale $\vec{N}_i$ und anliegenden Kanten $\vec{k}_j$ mit einer Wichtung $\alpha_j$ auf. Als Wichtung $\alpha_j$ wählt man die Summe der Öffnungswinkel zwischen den Kanten $\angle \vec{k}_{j+1}, \vec{k}_j$ und $\angle \vec{k}_{j-1}, \vec{k}_j$. Diese Konzept ist ähnlich dem Konzept der Öffnungswinkelwichtung bei der Berechnung der Flächennormalen $\vec{N}_i$ im Punkt $\vec{P}_i$.

Es gilt:

$$K_i = \frac{\sum_j \alpha_j \beta_j}{\sum_j \alpha_j} \tag{Gl. 4}$$

Summation über alle anliegenden Tangentialvektoren $\vec{k}_j$ am Basisknotenpunkt $\vec{P}_i$ mit der Wichtung $\alpha_j$

$$\alpha_j = \arccos\left(\frac{\vec{k}_{j+1} \cdot \vec{k}_j}{|\vec{k}_{j+1} \cdot \vec{k}_j|}\right) + \arccos\left(\frac{\vec{k}_{j-1} \cdot \vec{k}_j}{|\vec{k}_{j-1} \cdot \vec{k}_j|}\right)$$

und dem Winkel $\beta_j$ zwischen $\vec{N}_i$ und $\vec{k}_j$

$$\beta_j = \arccos\left(\frac{\vec{k}_j \cdot \vec{N}_i}{|\vec{k}_j \cdot \vec{N}_i|}\right)$$

In Kenntnis des Normalenvektors $\vec{N}_i$ und der Krümmung $\vec{K}_i$ in dem Knotenpunkt $\vec{P}_i$ ist nunmehr die Bildung des Schalenvektors $\vec{S}_i$ möglich, der Voraussetzung für die Bestimmung eines Oberflächenelementes ist, das dem Schalenknoten senkrecht beabstandet angeordnet werden kann und die Oberfläche einer Lage der Formschale bildet.

Die Gewichte zur Bestimmung des Normalenvektors $\vec{N}_i$, und der Krümmung $K_i$ lassen sich auch aus anderen an den Knotenpunkt $\vec{P}_i$ angrenzenden Netzparametem ermitteln.

Bezugnehmend auf die Figur 4 sind noch einmal alle wichtigen Parameter für die Berechnung der Krümmung an einem Knotenpunkt $\vec{P}_i$ am Beispiel dreier im Punkt $\vec{P}_i$ zusammenstoßenden Flächen dargestellt. Zur Ermittlung sind zum einen die Kantenvektoren $\vec{k}_1$, $\vec{k}_2$ und $\vec{k}_3$ notwendig, ebenso die Öffnungswinkel, $\alpha_1$, $\alpha_2$, $\alpha_3$, sowie die Einzelnor-

malenvektoren $\vec{n}_1$, $\vec{n}_2$ und $\vec{n}_3$. Aus diesen Werten kann mit der vorstehend genannten Formel 3 der Normalenvektor $\vec{N}_i$ ermittelt werden. Überdies kann unter Verwendung von Formel 4 auch das Krümmungsverhalten $K_i$ bestimmt werden.

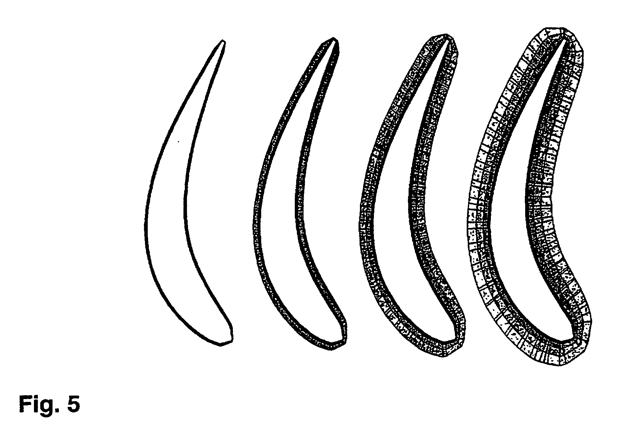

Die Figur 5 zeigt die Entstehung einer vier lagigen Formschale nach dem Mapped Mesher-Verfahren. Als FE-Vernetzung ist das Blatt einer realen Turbinenschaufel verwendet worden und in einer Querschnittsdarstellung gezeigt. Auf dieses Blatt ist mit dem Mapped Mesher-Verfahren eine vier lagige Formschale generiert worden (rechte Darstellung). Zu erkennen ist, daß sich die Krümmung der Turbinenschaufeloberfläche in unterschiedlichen Dicken der Formschale widerspiegelt. An der Abströmkante der Turbinenschaufel werden durch die konvexe Oberfläche nur dünne Formschalenelemente generiert. Während im konkaven Bereich des Blattes (linke Seite der Schaufel) die Formschale dicker ist als die vorgegebene mittlere Formschalendicke von 14 mm.

Der Übergang der Formschale zwischen konkaven und konvexen Bereichen des Blattes wird durch die grobe Vernetzung der Schaufel nur unzureichend beschrieben. Eine Verbesserung wird dadurch erreicht, daß bei der Krümmungsberechnung nicht nur die nächsten Nachbarn berücksichtigt werden. Dies wird realisiert, indem in vielen Iterationschritten die Formschale erzeugt wird. Dadurch wird die Krümmung von Oberflächen berücksichtigt, die nicht direkten Kontakt haben.

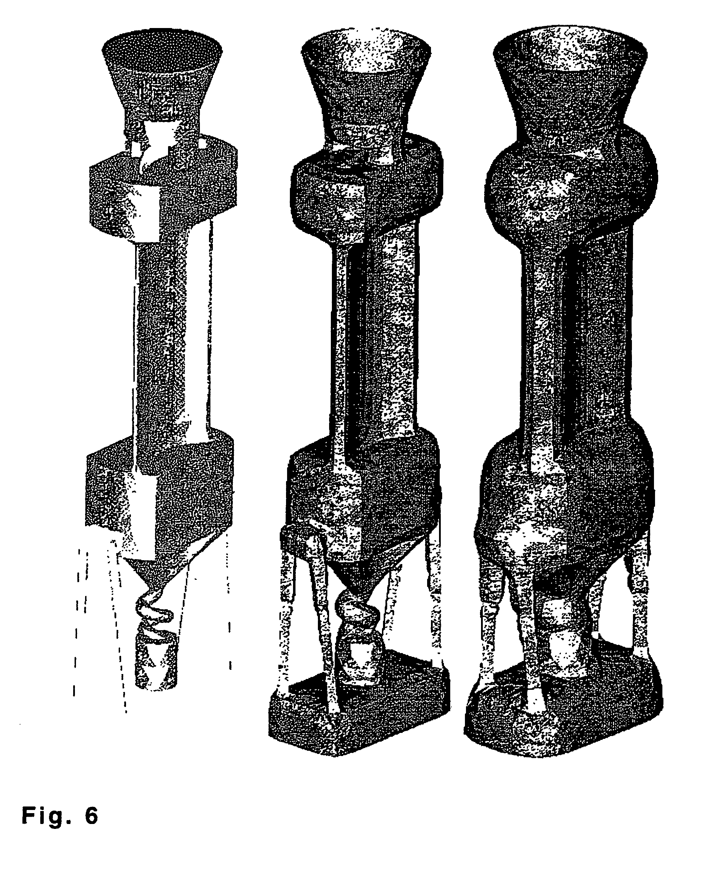

Die Figur 6 zeigt das Wachstum der Formschale auf einer Dummy-Turbinenschaufel von links nach rechts. Insbesondere die kritischen Bereiche der Formschale, der Helix im unteren Bereich der Schaufel und die Öffnung unterhalb des Trichters, werden exakt durch den Formschalengenerator generiert. Die drei Stufen der Generierung der Formschale verdeutlichen, daß die Formschalengenerierung iterativ erfolgt, so daß zur Fertigstellung einer Formschale mehrere Lagen von FE-Netzen übereinander liegend in Art eines Zwiebelschalenaufbaus generiert werden müssen.

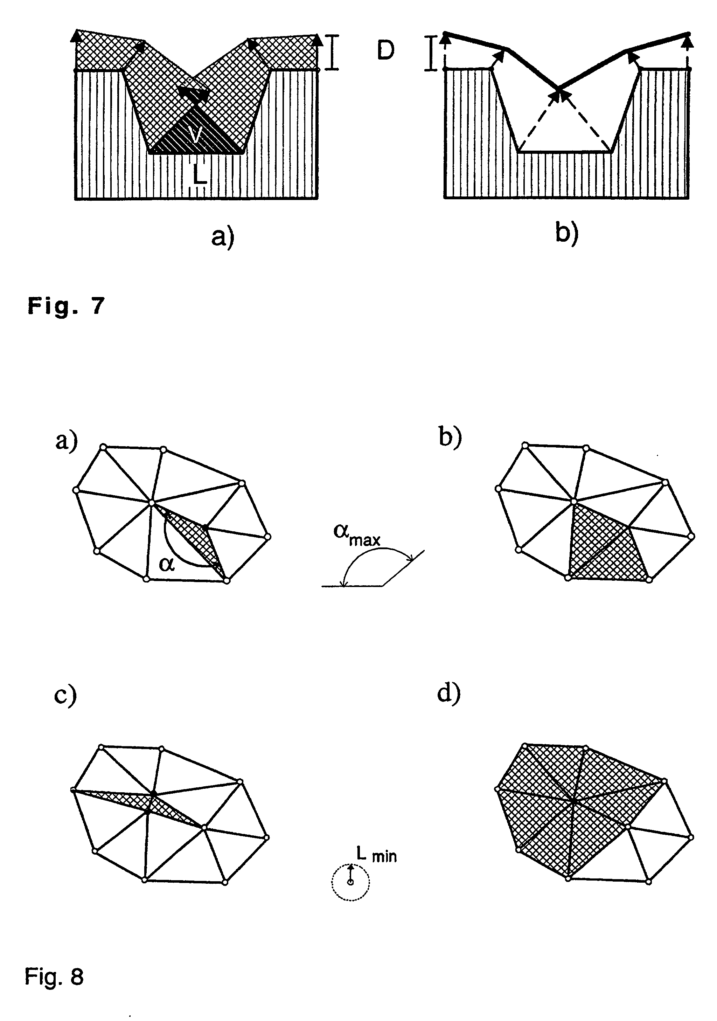

Wie bereits in der Aufgabenstellung formuliert soll die Möglichkeit bestehen bei der Generierung von Flächen- oder Volumenelemente auf der Oberfläche des Gußteils festzustellen, ob sich die einzelnen Elemente gegenseitig überlappen und somit ungeeignet für die weitere Entwicklung der Formschale sind. So wird beim Free Surface Modell bei stark konkav gekrümmten Flächen berücksichtigt, daß bei der Bildung von Oberflächenelementen, Flächen eliminiert werden müssen, die sich gegenseitig überlappen, wie es in Figur 7 a der Fall ist. Die Formschalenoberfläche wird aus diesem Grund in mehreren Schritten iterativ generiert. Wählt man zu wenig Iterationschritte um eine Formschale zu genieren, ergeben sich defekte Flächenelemente, deren Detektion und Elimination erforderlich ist. Figur 7 a zeigt erzeugte Formschalenelemente, die in einem Schritt erzeugt wurden. Zu erkennen ist, daß das Elemente V (Dunkel) von den Nachbarelementen durchdrungen wird sowie keine reguläre Form aufweist. Somit ist das Element V für die Finite Element Simulation nicht brauchbar. In diesem Fall ist die Generierung von Oberflächenelementen nach der Free Mesher Methode vorzuziehen, da bei dieser Methode Oberflächenelemente korrigiert oder eliminiert werden können (siehe Figur 7 b).

Als Analysekriterien für defekte Elemente wird die lokale Kantenlänge und der Flächeninnenwinkel genutzt. Entstehen Flächen mit zu großen oder kleinen Innenwinkeln bzw. Seitenlängen, so werden Knotenpunkte eliminiert oder Flächen neu angeordnet (siehe Figur 8 a-d). Dieses Verfahren wird nur für das Free Mesh Verfahren angewendet und behebt zu spitze oder stumpfe Innenwinkel (siehe Figur 8a,b) durch neue Unterteilung von benachbarten Elementen. Liegen Knotenpunkte von Oberflächenelementen dicht beieinander, so werden sie aufgrund zu kleiner bzw. großer Innenwinkel kollabiert (siehe Figur 8 c-d). Dabei wird Rechnung getragen, ob benachbarte Oberflächenelemente durch den Eliminationsschritt ebenfalls deformiert wurden. In diesem Fall wird der Analyse- und Korrekturschritt iterativ wiederholt, bis alle Oberflächenelemente der Umgebung des kollabierten Punktes eine reguläre Form aufweisen.

**Patentansprüche**

1. Verfahren zur Generierung eines Finite-Elemente Modells für eine Formschale für ein Gußteil bei dem die Formschale durch eine Vielzahl miteinander über Knotenpunkte verbundene finite Volumen- oder Oberflächenelemente beschrieben wird, deren Gesamtheit ein Netz, das sogenannte Finite-Elemente -Netz zur Beschreibung der Oberfläche der Formschale darstellt,

   **gekennzeichnet durch** die Kombination folgender Verfahrensschritte:

   - Erstellen eines die reale Oberflächengeometrie des Gußteils repräsentierenden Finite-Elemente -Netzes, des sogenannten Basisnetzes, das aus über Basisknoten zusammenhängenden Flächenelementen zusammengesetzt wird,
   - auf allen Basisknoten Generieren von Schalenvektoren, die senkrecht zu einer den jeweiligen Basisknoten enthaltenden Pseudo-Tangentialebene orientiert sind, deren Länge jeweils in Abhängigkeit vom Krümmungsverhalten der Flächenelemente an den Basisknoten generiert wird, und die die Lage von Schalenknoten angeben, die **durch** gegenseitiges Verknüpfen neue Flächenelemente bilden, die mit den **durch** die Schalenvektoren beabstandeten, die reale Oberflächengeometrie des Gußteils repräsentierenden Flächenelementen Volumenelemente eingrenzen, die eine erste Lage der Formschale definieren, und

- Iteratives Wiederholen der Generierung von Schalenvektoren zu den Schalenknoten der neu gebildeten Flächenelemente zur Erzeugung einer zweiten oder weiteren Lage der Formschale bis eine gewünschte vorgegebene Enddicke der Formschale erreicht wird,

wobei zur Generierung jeweils eines Schalenvektors eine gewichtete Summation über Flächennormalenvektoren der an den Basisknoten oder Schalenknoten anliegenden Flächenelementen durchgeführt wird.

2. Verfahren nach Anspruch 1,
   **dadurch gekennzeichnet, daß** der Schalenknoten zu jedem Basisknoten wie folgt ermittelt wird: :

$$\vec{P}_{S_i} = \vec{P}_i + \vec{S}_i$$

mit

$\vec{P}_i$ Basisknoten auf dem Gußteil oder iterativ erzeugtem Basisnetz
$\vec{S}_i$ Schalenvektor
$\vec{P}_{S_i}$ Schalenknoten

3. Verfahren nach Anspruch 2,
   **dadurch gekennzeichnet, daß** zur Ermittlung des Schalenvektors, der normal auf der Oberfläche des Gußteils im Basisknoten P steht, folgende Beziehung verwendet wird:

$$\vec{S}_i = D(K_i)\vec{N}_i$$

mit

$K_i$ Krümmung der Formschale
$D(K_i)$ Dicke der Formschale als Funktion der Krümmung
$\vec{N}_i$ Normalenvektor auf dem Basisknoten $\vec{P}_i$

wobei der Normafenvektor $\vec{N}_i$ durch gewichtete Summation über alle Normalenvektoren $\vec{n}_j$ bestimmt wird, die durch die an dem Basisknoten $\vec{P}_i$ anliegenden Flächenelemente definiert sind.

4. Verfahren nach Anspruch 3,
   **dadurch gekennzeichnet, daß** sich der Normalenvektor $\vec{N}_i$ am Basisknoten $\vec{P}_i$ aus nachfolgender Beziehung ergibt:

$$\vec{N}_i = \frac{\sum_j \alpha_j \vec{n}_j}{\left| \sum_j \alpha_j \vec{n}_j \right|}$$

und die Summation ausgeführt wird über alle am Basisknoten $\vec{P}_j$ anliegenden Flächen j mit dem Flächennormalenvektor

$$\vec{n}_j = \frac{(\vec{k}_{j+1} \times \vec{k}_j)}{|\vec{k}_{j+1} \times \vec{k}_j|}$$

mit den Tangentialvektoren $\vec{k}_j, \vec{k}_{j+1}$ auf dem Flächenelement j

$$\vec{k}_j = \vec{P}_j - \vec{P}_i$$

und der Gewichtung $\alpha_1$

$$\alpha_j = \arccos\left(\frac{\vec{k}_{j+1} \cdot \vec{k}_j}{\left|\vec{k}_{j+1} \cdot \vec{k}_j\right|}\right)$$

**5.** Verfahren nach Anspruch 3 oder 4,
**dadurch gekennzeichnet, daß** zur Ermittlung der Krümmung $\vec{K}_i$ der Flächenelemente am Schalenknoten folgende Beziehung verwendet wird:

$$K_i = \frac{\Sigma \alpha_j \, \beta_j}{\Sigma \alpha_j}$$

mit der Wichtung $\alpha_j$

$$\alpha_j = \arccos\left(\frac{\vec{k}_{j+1} \cdot \vec{k}_j}{\left|\vec{k}_{j+1} \cdot \vec{k}_j\right|}\right) + \arccos\left(\frac{\vec{k}_{j-1} \cdot \vec{k}_j}{\left|\vec{k}_{j-1} \cdot \vec{k}_j\right|}\right)$$

und dem Winkel $\beta_j$ zwischen $\vec{N}_i$ und $\vec{k}_j$

$$\beta_i = \arccos\left(\frac{\vec{N}_i \cdot \vec{k}_j}{\left|\vec{N}_i \cdot \vec{k}_j\right|}\right)$$

**Claims**

**1.** Method for generating a finite element model for a shell mould for a casting, in which the shell mould is described by a multiplicity of finite volume or surface elements which are connected to one another via node points and which together form a mesh, the so-called finite element mesh, for describing the surface of the shell mould, **characterized by** the combination of the following methods steps:

- compilation of a finite element mesh representing the real surface geometry of the casting, the so-called base mesh which is composed of surface elements connected via base nodes,
- on all base nodes, generation of shell vectors which are oriented perpendicular to a pseudo-tangential plane containing the respective base nodes and the length of which is in each case generated as a function of the curvature characteristics of the surface elements at the base nodes and which indicate the position of shell nodes which form new surface elements by mutual linkage, which surface elements enclose volume elements, which define a first layer of the shell mould, with the surface elements which are spaced apart by the shell vectors and represent the real surface geometry of the casting, and
- iterative repetition of the generation of shell vectors relating to the shell nodes of the newly formed surface elements, in order to generate a second or further layer of the shell mould, until a desired, predetermined final thickness of the shell mould is reached, wherein in order to generate one shell vector in each case, a weighted summing over surface normal vectors of the surface elements bearing against the base nodes or shell nodes is carried out.

2. Method according to Claim 1, **characterized in that** the shell node for each base node is determined as follows:

$$\vec{P}_{Si} = \vec{P}_i + \vec{S}_i$$

where

$\vec{P}_i$ is the base node on the casting or iteratively produced base mesh
$\vec{S}_i$ is the shell vector
$\vec{P}_{Si}$ is the shell node.

3. Method according to Claim 2, **characterized in that** the following relationship is used to determine the shell vector which is normal to the surface of the casting at the base node P:

$$\vec{S}_i = D(K_i)\vec{N}_i$$

where

$\vec{K}_i$ is the curvature of the shell mould $D(K_i)$ is the thickness of the shell mould as a function of the curvature $\vec{N}_i$ normal vector on the base node $\vec{P}_i$

the normal vector $\vec{N}_i$ being determined by weighted summing over all normal vectors $\vec{n}_j$ which are defined by the surface elements bearing against the base node $\vec{P}_i$.

4. Method according to Claim 3, **characterized in that** the normal vector $\vec{N}_i$ at the base node $\vec{P}_i$ is given by the following relationship:

$$\vec{N}_i = \frac{\sum_j \alpha_j \bar{n}_j}{\left|\sum_j \alpha_j \bar{n}_j\right|}$$

and the summing is carried out over all surfaces j which bear against the base node $\vec{P}_i$ with the surface normal vector

$$n_j = \frac{(\breve{k}_{j+1} \times \breve{k}_j)}{|\breve{k}_{j+1} \times \breve{k}_j|}$$

with the tangential vectors $\breve{k}_j$, $\breve{k}_{j-1}$ on the surface element j

$$\breve{k}_j = \vec{P}_j - \vec{P}_i$$

and the weighting $\alpha_j$

$$\alpha_j = \arccos\left(\frac{\bar{k}_{j+1} \cdot \bar{k}_j}{|\bar{k}_{j+1} \cdot \bar{k}_j|}\right)$$

5. Method according to Claim 3 or 4, **characterized in that** the following relationship is used to determine the curvature $\vec{K}_i$ of the surface elements at the shell node:

**EP 0 986 027 B1**

$$K_i = \frac{\Sigma \alpha_j \beta_j}{\Sigma \alpha_j}$$

with the weighting $\alpha_j$

$$\alpha_j = \arccos\left(\frac{\vec{k}_{j+1} \cdot \vec{k}_j}{\left|\vec{k}_{j+1} \cdot \vec{k}_j\right|}\right) + \arccos\left(\frac{\vec{k}_{j-1} \cdot \vec{k}_j}{\left|\vec{k}_{j-1} \cdot \vec{k}_j\right|}\right)$$

and the angle $\beta_j$ between $\vec{N}_i$ and $\vec{k}_j$

$$\beta_j = \arccos\left(\frac{\vec{N}_i \cdot \vec{k}_j}{\left|\vec{N}_i \cdot \vec{k}_j\right|}\right)$$

**Revendications**

1. Procédé pour générer un modèle d'éléments finis pour un moule carapace pour une pièce moulée, selon lequel le moule est décrit par une multiplicité d'éléments finis volumiques ou surfaciques reliés entre eux par des points nodaux, qui forment ensemble un maillage, appelé maillage d'éléments finis, pour décrire la surface du moule carapace,
   **caractérisé par** la combinaison des étapes suivantes :

   - élaboration d'un maillage d'éléments finis représentant la géométrie réelle de la surface de la pièce moulée, appelé maillage de base, qui est composé d'éléments surfaciques solidarisés par des points nodaux de base,
   - création, pour tous les points nodaux de base, de vecteurs de carapace qui sont orientés perpendiculairement à un plan pseudo-tangentiel contenant le point nodal de base respectif, dont la longueur est respectivement générée en fonction du comportement de courbure des éléments surfaciques aux points nodaux de base, et qui indiquent la position de points nodaux de carapace qui, en étant mutuellement reliés, forment de nouveaux éléments surfaciques qui, avec les éléments surfaciques espacés par les vecteurs de carapace qui représentent la géométrie réelle de la surface de la pièce moulée, délimitent des éléments volumiques qui définissent une première couche du moule carapace, et
   - répétition itérative de la création de vecteurs de carapace pour les points nodaux de carapace des nouveaux éléments surfaciques formés, afin de produire une deuxième couche puis des couches supplémentaires du moule carapace, jusqu'à l'obtention d'une épaisseur finale prescrite souhaitée du moule carapace,

   la création de chaque vecteur de carapace s'effectuant par totalisation, pondérée sur des vecteurs normaux à la surface, des éléments surfaciques attenants aux points nodaux de base ou de carapace.

2. Procédé selon la revendication 1, **caractérisé en ce que** le point nodal de carapace pour chaque point nodal de base est déterminé comme suit :

$$\vec{P}_{S_i} = \vec{P}_i + \vec{S}_i$$

avec

$\vec{P}_i$ point nodal de base sur la pièce moulée ou sur le maillage de base produit par itération
$\vec{S}_i$ vecteur de carapace

**12**

$\vec{P}_{Si}$ point nodal de carapace

3. Procédé selon la revendication 2, **caractérisé en ce que**, pour déterminer le vecteur de carapace qui est normal à la surface de la pièce moulée au point nodal de base P, on utilise la relation suivante :

$$\vec{S}_i = D(K_i)\vec{N}_i$$

avec

$K_i$ courbure du moule carapace
$D(K_i)$ épaisseur du moule carapace en fonction de la courbure
$\vec{N}_i$ vecteur normal au point nodal de base $\vec{P}_i$ le vecteur normal $\vec{N}_i$ étant déterminé par totalisation pondérée sur tous les vecteurs normaux $\vec{n}_j$ qui sont définis par les éléments surfaciques attenants au point nodal de base $\vec{P}_i$.

4. Procédé selon la revendication 3, **caractérisé en ce que** le vecteur normal $\vec{N}_i$ au point nodal de base $\vec{P}_i$ s'obtient d'après la relation suivante :

$$\vec{N}_i = \frac{\sum_j \alpha_j \vec{n}_j}{\left| \sum_j \alpha_j \vec{n}_j \right|}$$

et la totalisation est effectuée sur toutes les surfaces attenantes au point nodal de base $\vec{P}_i$ avec le vecteur normal à la surface

$$\vec{n}_j = \frac{(\vec{k}_{j+1} \times \vec{k}_j)}{|\vec{k}_{j+1} \times \vec{k}_j|}$$

avec les vecteurs tangentiels $\vec{k}_j, \vec{k}_{j+1}$ sur l'élément surfacique j

$$\vec{k}_j = \vec{P}_j - \vec{P}_i$$

et la pondération $\alpha_j$

$$\alpha_j = \arccos\left( \frac{\vec{k}_{j+1} \cdot \vec{k}_j}{|\vec{k}_{j+1} \cdot \vec{k}_j|} \right)$$

5. Procédé selon la revendication 3 ou 4, **caractérisé en ce que**, pour déterminer la courbure $\vec{K}_i$ des éléments surfaciques au point nodal de carapace, on utilise l'équation suivante :

$$K_i = \frac{\Sigma \alpha_j \beta_j}{\Sigma \alpha_j}$$

avec la pondération $\alpha_j$

$$\alpha_j = \arccos\left(\frac{\vec{k}_{j+1} \cdot \vec{k}_j}{\left|\vec{k}_{j+1} \cdot \vec{k}_j\right|}\right) + \arccos\left(\frac{\vec{k}_{j-1} \cdot \vec{k}_j}{\left|\vec{k}_{j-1} \cdot \vec{k}_j\right|}\right)$$

et l'angle $\beta_i$ entre $\vec{N}_i$ et $\vec{k}_j$

$$\beta_i = \arccos\left(\frac{\vec{N}_i \cdot \vec{k}_j}{\left|\vec{N}_i \cdot \vec{k}_j\right|}\right)$$

Fig. 1

Fig. 2

a)

$n_1$ $n_3$

N

$n_5$

b)

$n_{31}$

$n_1$

N

$n_{32}$

$n_5$

c)

$n_{31}$

$n_1$

N $n_{321}$

$n_{322}$

$n_5$

Fig. 3

N

$n_2$

$n_1$ $n_3$

$k_1$

$k_2$

Fig. 4

Fig. 5

Fig. 6

**Fig. 7**

Fig. 8